# EUROPEAN PATENT APPLICATION

(11) **EP 2 136 591 A2**
(43) Date of publication of application: **23.12.2009**
(21) Application number: 09007362.8
(22) Date of filing: 03.06.2009
(51) Int. Cl.: H04W 52/02, H04W 88/08

(54) **Method and system for Bluetooth and Wimax coexistence**

(30) Priority: 16.06.2008 US 61957 P; 29.12.2008 US 141144 P; 11.02.2009 US 369288
(71) Applicant: Broadcom Corporation, Irvine, CA 92617 (US)
(72) Inventor: Hall, Steven, Olivenhain, CA 92024 (US)
(74) Representative: Jehle, Volker Armin

(57) **Abstract**

WiMAX and Bluetooth coexistence may be enabled in a wireless device that comprises collocated WiMAX subsystem and Bluetooth subsystem. Concurrent WiMAX and Bluetooth communications may be carried on via the wireless device to the extent that WiMAX communication is unaffected by the Bluetooth communications. Scheduling of Bluetooth communications may be performed to optimize Bluetooth communication while avoiding potential collision with the WiMAX communication. The Bluetooth communication scheduling may allow Bluetooth messaging transmission during active WiMAX uplink slots and/or inactive WiMAX slots, Bluetooth messaging reception during active WiMAX downlink slots and/or inactive WiMAX slots, and/or no Bluetooth transmission during active WiMAX downlink slots. Clock signals utilized in the WiMAX subsystem and the Bluetooth subsystem may be synchronized to ensure that Bluetooth communication is aligned with the WiMAX frames. When more than one Bluetooth profile are active and/or needed, prioritization among the Bluetooth profiles may be utilized when scheduling Bluetooth communications.

## Description

### CROSS-REFERENCE TO RELATED APPLICATIONS/INCORPORATION BY REFERENCE

This patent application makes reference to, claims priority to and claims benefit from United States Provisional Application Serial No. 61/061957 (Attorney Docket No. 19492US01) filed on June 16, 2008 and from United States Provisional Application Serial No. 61/141144 (Attorney Docket No. 19492US02) filed on December 29, 2008.

The above stated applications are hereby incorporated herein by reference in their entirety.

### FEDERALLY SPONSORED RESEARCH OR DEVELOPMENT

[Not Applicable].

### [MICROFICHE/COPYRIGHT REFERENCE]

[Not Applicable].

### FIELD OF THE INVENTION

Certain embodiments of the invention relate to wireless communication. More specifically, certain embodiments of the invention relate to a method and system for Bluetooth and WiMAX coexistence.

### BACKGROUND OF THE INVENTION

The field of wireless communication has seen dramatic growth the last few years. In today's world, most people use their wireless communication devices, for example hand-held mobile devices, for various purposes, business and personal, on a constant and daily basis. Society is truly becoming a wireless one as a lot of wireless solutions have been introduced, and have made tremendous strides into everyday's life.

Communication devices, which may be portable/mobile and/or stationary, may comprise a plurality of wireless technologies to enable use of various interfaces in transmitting and/or receiving data. For example, mobile devices, which may enable cellular connectivity, have become a near absolute necessity in today's world. While mobile technology originally evolved from traditional land-based communication technologies, and was merely intended to add an element of mobility to the traditional telephony service, this technology has grown beyond that initial purpose. Many modern mobile technologies, including such technologies as GSM/GPRS/EDGE, UMTS, and CDMA2000, LTE, incorporate substantial data capabilities. Most of today's mobile services comprise such features as text messaging, audio/video streaming, and web browsing. Modern mobile devices, for example cell phones and/or smart phones, may be utilized to support additional services via other wireless interfaces, for example, wireless personal area networks (WPAN) and/or wireless local area network (WLAN) interfaces.

The use of wireless personal area networks (WPAN) continues to gain popularity in a great number of applications because of the flexibility and convenience in connectivity they provide. WPAN systems generally replace cumbersome cabling and/or wiring used to connect peripheral devices and/or mobile terminals by providing short distance wireless links that allow connectivity within very narrow spatial limits (typically, a 10-meter range). WPAN may be based on standardized technologies; for example Class 2 Bluetooth (BT) technology.

While WPAN may be very beneficial for certain applications, other applications may require larger service areas and/or capabilities. To satisfy such needs, other technologies have been developed to provide greater wireless service. Wireless local area networks (WLAN) systems may operate within a 100-meter range, for example. In contrast to the WPAN systems, WLAN provide connectivity to devices that are located within a slightly larger geographical area, such as the area covered by a building or a campus, for example. WLAN systems are generally based on specific standards, for example IEEE 802.11 standard specifications, and typically operate within a 100-meter range, and are generally utilized to supplement the communication capacity provided by traditional wired Local Area Networks (LANs) installed in the same geographic area as the WLAN system.

Some WLAN systems may be operated in conjunction with WPAN systems to provide users with an enhanced overall functionality. For example, Bluetooth technology may be utilized to connect a laptop computer or a handheld wireless terminal to a peripheral device, such as a keyboard, mouse, headphone, and/or printer, while the laptop computer or the handheld wireless terminal is also connected to a campus-wide WLAN network through an access point (AP) located within the building. Also, mobile technology may allow use of the mobile phone as a form of wireless modem that allows connecting a laptop, for example, to the internet via a mobile network. More recently, Worldwide Interoperability for Microwave Access (WiMAX) based systems have become popular, and use of WiMAX to provide wireless connectivity is expanding.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for Bluetooth and WiMAX coexistence, substantially as shown in and/or described in connection with at least one of the figures, as set forth more completely in the claims.

According to an aspect, a method for communication is provided, the method comprising:
in a communication device comprising at least a WiMAX Interface and a Bluetooth interface:
   determining when communication via said Bluetooth interface will interfere with operation of said WiMAX interface; and
   scheduling said communication via said Bluetooth interface during sleep mode and/or active mode of said WiMAX interface, based on said determination.

Advantageously, said communication via said Bluetooth interface comprise advanced audio distribution profile (A2DP) based communication and/or human interface device (HID) based communication.

Advantageously, the method further comprises transmitting and/or receiving sniff based messages during said HID based communication.

Advantageously, said scheduling allows reception of messages during said communication via said Bluetooth interface during downlink (DL) active slots and/or inactive slots on said WiMAX interface in said communication device.

Advantageously, said scheduling ensures no transmission of messages during said communication via said Bluetooth interface during downlink (DL) active slots on said WiMAX interface in said communication device.

Advantageously, said scheduling allows transmission of messages during said communication via said Bluetooth interface during uplink (UL) active slots and/or inactive slots on said WiMAX interface in said communication device.

Advantageously, said scheduling enables optimizing throughput of said communication via said Bluetooth interface.

Advantageously, the method further comprises prioritizing among one or more available Bluetooth profiles during said scheduling of said communication via said Bluetooth interface to achieve said optimized throughput.

Advantageously, the method further comprises synchronizing clock signals utilized for communication via said WiMAX interface and said Bluetooth interface.

Advantageously, the method further comprises performing said synchronization of clock signals during active or non-active states of said Bluetooth interface.

Advantageously, the method further comprises performing said synchronization of clock signals based on whether said communication device is operable as a master Bluetooth device or a slave Bluetooth device.

According to an aspect, a system for communication comprises:
one or more circuits for use in a communication device comprising at least a WiMAX Interface and a Bluetooth interface, wherein said one or more circuits are operable to determine when communication via said Bluetooth interface will interfere with operation of said WiMAX interface; and
said one or more circuits are operable to schedule said communication via said Bluetooth interface to mitigate said determined interference during sleep mode and/or active mode of said WiMAX interface, based on said determination.

Advantageously, said communication via said Bluetooth interface comprise advanced audio distribution profile (A2DP) based communication and/or human interface device (HID) based communication.

Advantageously, said one or more circuits enable transmission and/or reception of sniff based messages during said HID based communication.

Advantageously, said scheduling allows reception of messages during said communication via said Bluetooth interface during downlink (DL) active slots and/or inactive slots on said WiMAX interface in said communication device.

Advantageously, said scheduling ensures no transmission of messages during said communication via said Bluetooth interface during downlink (DL) active slots on said WiMAX interface in said communication device.

Advantageously, said scheduling allows transmission of messages during said communication via said Bluetooth interface during uplink (UL) active slots and/or inactive slots on said WiMAX interface in said communication device.

Advantageously, said scheduling enables optimizing throughput of said communication via said Bluetooth interface.

Advantageously, said one or more circuits are operable to prioritize among one or more available Bluetooth profiles during said scheduling of said communication via said Bluetooth interface to achieve said optimized throughput.

Advantageously, said one or more circuits are operable to synchronize clock signals utilized for communication via said WiMAX interface and said Bluetooth interface.

Advantageously, said one or more circuits are operable to perform said synchronization of clock signals during active or non-active states of said Bluetooth interface.

Advantageously, said one or more circuits are operable to perform said synchronization of clock signals based on whether said communication device is operable as a master Bluetooth device or a slave Bluetooth device.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram that illustrates an exemplary system that may utilize Bluetooth and WiMAX coexistence, in accordance with an embodiment of the invention.

FIG. 2 is a block diagram that illustrates an exemplary communication system that enables signal management and switching among a plurality of wireless interfaces, in accordance with an embodiment of the invention.

FIG. 3A is a diagram that illustrates WiMAX and Bluetooth clock synchronization in a device when Bluetooth subsystem in the device is inactive, in accordance with an embodiment of the invention.

FIG. 3B is a diagram that illustrates WiMAX and Bluetooth clock synchronization in a device when the Bluetooth subsystem in the device is actively utilized as master in Bluetooth communication with a slave Bluetooth device, in accordance with an embodiment of the invention.

FIG. 3C is a diagram that illustrates WiMAX and Bluetooth clock synchronization in a device when the Bluetooth subsystem in the device is actively utilized as master in Bluetooth communication with two slave Bluetooth devices, in accordance with an embodiment of the invention.

FIG. 3D is a diagram that illustrates WiMAX and Bluetooth clock synchronization when the Bluetooth subsystem operates as a slave in Bluetooth communication with a master Bluetooth device that is communicating with another slave Bluetooth device, in accordance with an embodiment of the invention.

FIG. 4A is a timing diagram that illustrates exemplary WiMAX communication scheduling and control during sleep mode in a WiMAX capable communication device, in accordance with an embodiment of the invention.

FIG. 4B is a timing diagram that illustrates exemplary Bluetooth A2DP communication scheduling during WiMAX sleep mode to enable WiMAX and Bluetooth coexistence in a communication device, in accordance with an embodiment of the invention.

FIG. 4C is a timing diagram that illustrates exemplary Bluetooth A2DP and 10 ms HID sniff communication scheduling during WiMAX sleep mode to enable WiMAX and Bluetooth coexistence in a communication device, in accordance with an embodiment of the invention.

FIG. 4D is a timing diagram that illustrates exemplary Bluetooth A2DP and 11.25-ms HID sniff communication scheduling during WiMAX sleep mode to enable WiMAX and Bluetooth coexistence in a communication device, in accordance with an embodiment of the invention.

FIG. 4E is a timing diagram that illustrates exemplary Bluetooth A2DP and 12.5-ms HID sniff communication scheduling during WiMAX sleep mode to enable WiMAX and Bluetooth coexistence in a communication device, in accordance with an embodiment of the invention.

FIG. 5A is a timing diagram that illustrates exemplary Bluetooth A2DP and 10 ms HID sniff communication scheduling during WiMAX active mode to enable WiMAX and Bluetooth coexistence in a communication device that is operable as Bluetooth A2DP slave device, in accordance with an embodiment of the invention.

FIG. 5B is a timing diagram that illustrates exemplary Bluetooth A2DP and 10 ms HID sniff communication scheduling during WiMAX active mode to enable WiMAX and Bluetooth coexistence in a communication device that is operable as Bluetooth A2DP master device, in accordance with an embodiment of the invention.

FIG. 6 is a flow chart that illustrates management of system that comprises a plurality of wireless interfaces to enable WiMAX and Bluetooth coexistence, in accordance with an embodiment of the invention.

### DETAILED DESCRIPTION OF THE INVENTION

Certain embodiments of the invention may be found in a method and system for Bluetooth and WiMAX coexistence. Various embodiments of the invention may provide a wireless device that comprises a collocated WiMAX subsystem and a Bluetooth subsystem, which may be enabled to perform WiMAX and Bluetooth coexistence operations in which WiMAX and Bluetooth communications may be carried on concurrently via the wireless device. The wireless device may be operable to determine when communication via the Bluetooth interface will interfere with the WiMAX interface, and based on that determination, the wireless device manages Bluetooth communication to mitigate the determined interference. The Bluetooth communications may enable Advanced Audio Distribution Profile (A2DP) communications over Asynchronous Connection-Less (ACL) data links and/or Human Interface Device (HID) sniff communications. The WiMAX communication may operate in an active mode and/or may operate in a sleep mode in which at least as subset of the communicated frames comprise no WiMAX activity. Communication scheduling for the Bluetooth communication may be performed to optimize Bluetooth communication while avoiding potential collision with the WiMAX communication. The Bluetooth communication scheduling may allow Bluetooth messaging transmission during active WiMAX uplink slots and/or inactive WiMAX slots. Bluetooth messaging reception may occur during active WiMAX downlink slots and/or inactive WiMAX slots. Various embodiments of the invention may ensure that no Bluetooth transmission occurs during active WiMAX downlink slots. Clock signals utilized during WiMAX and Bluetooth communications may be synchronized to enable performing of scheduling operations. The clock signals utilized during Bluetooth transmission and/or reception via the Bluetooth subsystem may be synchronized to WiMAX communication via the WiMAX subsystem to ensure that Bluetooth communication may be aligned with WiMAX frames utilized for WiMAX communication. In instances where more than one Bluetooth connection is active and/or needed, prioritization among the Bluetooth connections may be utilized when performing scheduling operations.

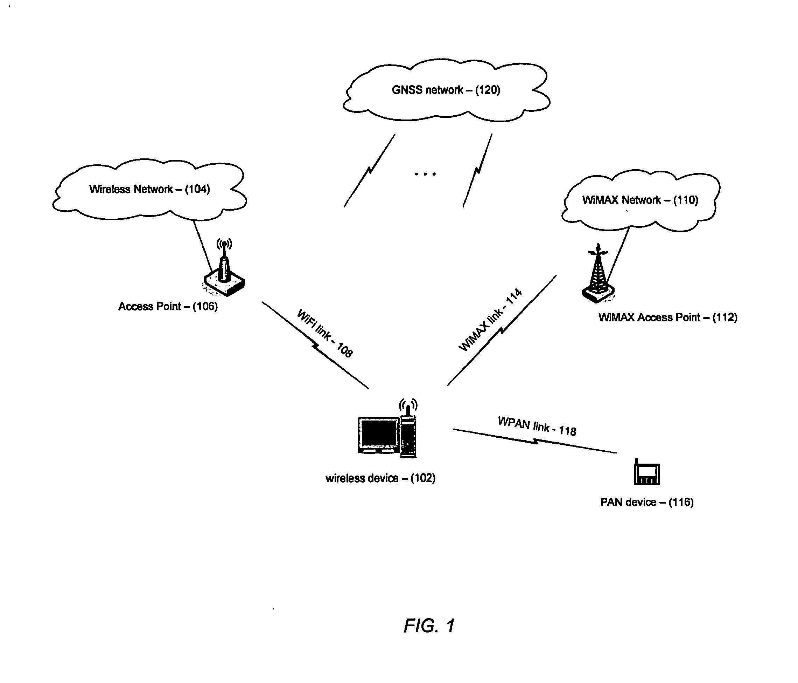

FIG. 1 is a block diagram that illustrates an exemplary system that may utilize Bluetooth and WiMAX coexistence, which may be utilized in accordance with an embodiment of the invention. Referring to FIG. 1, there is shown a wireless device 102, a wireless network 104, an access point 106, a WiFi link 108, a Worldwide Interoperability for Microwave Access (WiMAX) network 110, a WiMAX access point 112, a WiMAX link 114, a personal area network (PAN) device 116, a wireless personal area network (WPAN) link 118, and a Global Navigation Satellite System (GNSS) network 120.

The wireless device 102 comprise suitable logic, circuitry and/or code that may enable portable or mobile communications with a plurality of wireless devices and/or networks. The wireless device 102 may also enable performing one or more tasks requested via users of the wireless device 102. The invention may not be limited to a specific device, but may comprise for example, a general purpose processing device, a specialized processing device, a specialized peripheral device, or suitable hardware, firmware, software and/or code, which may be enabled to perform a job requested via users of the wireless device 102. For example, the wireless device 102 may also enable personal communication, audio/video recording and/or playing, gaming operations, and/or various other tasks, which may be requested via the wireless device 102 by a user. The wireless device 102 may be enabled to communicate with one or more of supported wireless and/or wired networks while performing tasks requested via the wireless device 102 for example. A user of the wireless device 102 may utilize the wireless device 102 directly, via supported user interfaces within the wireless device 102, and/or indirectly via available networks and/or via other devices, such as the PAN device 116, which may interact with the wireless device 102 via a communication interface, for example the WPAN link 118. Exemplary direct supported user interfaces may comprise touchscreen input, audio input, and hardware and/or software keyboard input. The wireless device 102 may also comprise functionality that may enable utilizing one or more of available networks, to connect to available devices and/or resources for example. The network connectivity may be achieved, for example, via one or more wireless communication interfaces, including, for example, WiFi and/or WiMAX interfaces, which may be operable to provide connectivity to corresponding networks and/or devices.

The wireless network 104 may comprise a plurality of the access point 106, and suitable logic, circuitry and/or code that may enable implementation of one or more wireless communication functions corresponding to a wireless technology. Exemplary wireless technology may comprise, for example, WiFi based architecture. The access point 106 may comprise suitable hardware, logic, circuitry, and/or code that may provide access network to the wireless network 104 for wireless capable devices, for example the wireless device 102.

The WiMAX network 110 may comprise a plurality of the WiMAX access points 112. The WiMAX network 11 may comprise suitable logic, circuitry and/or code that may enable implementation of one or more communication functions corresponding to the Worldwide Interoperability for Microwave Access (WiMAX) protocol. The WiMAX access point 112 may comprise suitable hardware, logic, circuitry, and/or code that may be utilized to enable transmission and/or reception of WiMAX based communications between the WiMAX network 110 and WiMAX capable devices, for example the wireless device 102, via the WiMAX link 114.

The PAN device 116 may comprise suitable logic, circuitry and/or code that may enable performing some accessory functionality in conjunction with use of other devices, for example the wireless device 102, based on one or more PAN protocols. For example, the PAN device 116 may comprise a hands-free headset that may be utilized, in conjunction with the wireless device 102, during cellular based voice calls. The wireless device 102 may interact with the PAN device 116 via one or more PAN interfaces, which may be based on wired and/or wireless PAN interfaces. For example, the wireless device 102 may communicate with the PAN device 116 via the WPAN link 118. The WPAN link 118 may correspond to Bluetooth, ZigBee, and/or Ultra-Wideband (UWB) connections between the PAN device 116 and the wireless device 102.

The GNSS network 120 may comprise a plurality of orbiting satellite nodes in a global navigation satellite system, a plurality of land-based support entities. The GNSS network 120 may comprise suitable logic, circuitry and/or code that may enable communication with land-based devices, for example the wireless device 102, via satellite links to provide, for example, navigational capabilities. The GNSS network 120 may comprise, for example, a Global Positioning System (GPS) based network, a GLONASS based network, and/or a Galileo based network.

In operation, the wireless device 102 may be utilized to enable connectivity via one or more of available communication interfaces in the wireless device 102. The wireless device 102 may also be utilized to enable performing one or more tasks requested via users of the wireless device 102. For example, the wireless device 102 may enable personal communication, playing and/or recording of audio/video streams, and/or may be utilized as to perform data processing and/or storage. The wireless device 102 may utilize, for example, the WiFi link 108 to enable access to the wireless network 106 via the access point 106. The wireless device 102 may also utilize, for example, the WiMAX link 114 to enable access to the WiMAX network 110 via the WiMAX access point 112. The wireless device 102 may also receive satellite navigational signals, from the GNSS network 120 for example, to enable performing positional related tasks. The wireless device 102 may also be enabled to communicate with the PAN device 116, via the WPAN link 118 for example.

Communication between the wireless device 102 and the PAN device 116 may enable use of the wireless device 102 via the PAN device 116. The PAN device 116 may be utilized as human interface device (HID) to communicate, to the wireless device 102 via the WPAN link 114, requests and/or commands inputted by a user of the PAN device 116. Since the use of the PAN device 116 as a HID may not be continuous, the wireless device 102 may comprise a functionality to enable tracking use of the PAN device 116, via HID 'sniff communication. Sniff communication may enable a host device, for example the wireless device 102, to check for and/or detect activity by users via a HID, for example the PAN device 116, wherein the host device may periodically poll the HID. For example, the wireless device 102 may, for example, setup periodic sniff intervals, which may be 10 ms, 11.25 ms, and/or 12.5 ms, to poll for activity by the PAN device 116. Communication between the wireless device 102 and the PAN device 116 may also enable use of the PAN device 116, via the wireless device 102, to perform dedicated operations that the PAN device 116 may be better suited to perform. For example, the wireless device 102 may be enabled to utilize Advanced Audio Distribution Profile (A2DP) connections over Bluetooth Asynchronous Connection-Less (ACL) data links, via the WPAN link 118, to communicate audio streams to the PAN device 116. Since Bluetooth based communications, which may comprise HID sniff and/or A2DP communications, may be performed over bandwidth and/or frequencies that may be sufficiently proximate to bandwidth and/or frequencies utilized during WiMAX communications, packet communication, via the WiMAX link 114, may be adversely affected due to interference caused by the Bluetooth communication via the WPAN interface 114.

In an exemplary embodiment of the invention, communication in the wireless device 102 may be managed to enable Bluetooth communication during WiMAX communication, wherein transmission and/or reception of Bluetooth based messaging may be scheduled to enable optimizing Bluetooth communication throughput while, at the same time, preventing any potential interference that may be caused to the WiMAX communication by the Bluetooth communication. For example, Bluetooth communication may be scheduled such that Bluetooth messaging transmission by the wireless device 102 is limited to periods where the WiMAX link 114 is inactive and/or is only active in uplink direction. The Bluetooth scheduling may also allow for Bluetooth messaging reception in the wireless device 102 may be permitted in periods where the WiMAX link 114 is inactive and/or is only active in downlink direction. Additionally, and to facilitate scheduling of Bluetooth communication in the wireless device 102, clock signals utilized during WiMAX and Bluetooth communications may be synchronized to ensure that Bluetooth communication may be aligned with the WiMAX frames.

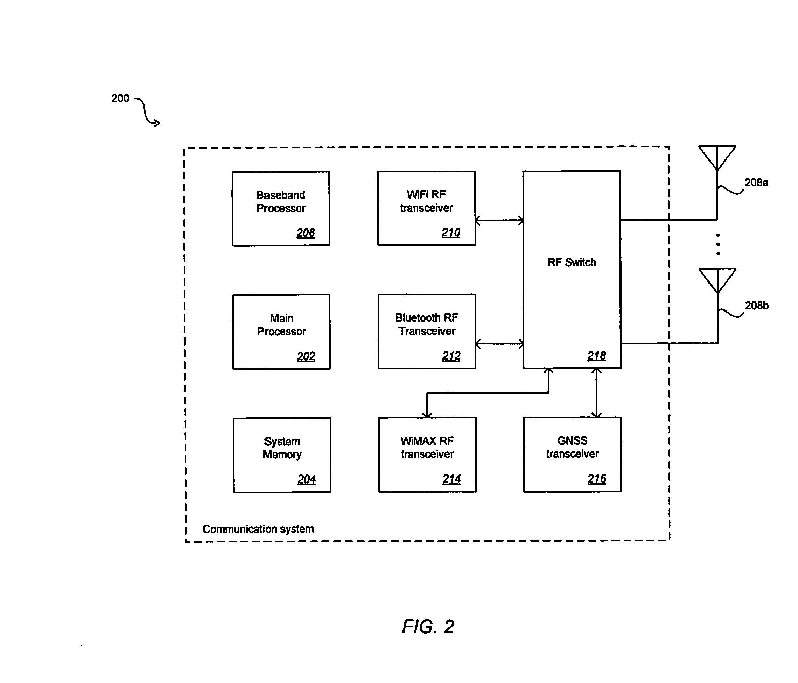

FIG. 2 is a block diagram that illustrates an exemplary communication system that enables signal management and switching among a plurality of wireless interfaces, in accordance with an embodiment of the invention. Referring to FIG. 2, there is shown a communication system 200, a main processor 202, a memory 204, a baseband processor 206, a plurality of antenna 208a, ... , 208b, a Bluetooth RF transceiver 210, a WiFi RF transceiver 212, a WiMAX transceiver 214, a GNSS transceiver 216, and an RF switch 218.

The communication system 200 may comprise the main processor 202, the memory 204, the baseband processor 206, the plurality of antenna 208a, ..., 208b, the Bluetooth RF transceiver 210, the WiFi RF transceiver 212, the WiMAX transceiver 214, the GNSS transceiver 216, and the RF switch 218. The communication system 200 may also comprise suitable logic, circuitry, and/or code that may enable receiving, transmitting, and processing RF signals. The communication system 200 may be integrated within a device, for example the wireless device 102, to enable RF signal transmission and/or reception, during GNSS, WiFi, WiMAX, and/or Bluetooth communication, via the WiFi link 108, WiMAX link 114 and/or the WPAN link 118.

The main processor 202 may comprise suitable logic, circuitry, and/or code that may enable control and/or data processing operations in the communication system 200. The main processor 202 may be utilized to control at least a portion of the memory 204, the baseband processor 206, the Bluetooth RF transceiver 210, the WiFi RF transceiver 212, the WiMAX transceiver 214, the GNSS transceiver 216, and/or the RF switch 218. In this regard, the main processor 202 may generate at least one signal for controlling operations within the communication system 200. The main processor 202 may also enable execution of applications that may be utilized by the communication system 200. For example, the main processor 202 may execute applications that may enable displaying of, and/or interacting with, content received via RF signals in the communication system 200.

The main processor 202 may also comprise suitable logic, circuitry, and/or code that may enable baseband frequency signals processing. In this regard, the main processor 202 may process and/or handle signals received from the Bluetooth RF transceiver 210, the WiFi RF transceiver 212, the WiMAX transceiver 214, and/or the GNSS transceiver 216. The main processor 202 may process and/or handle signals that may be transmitted via the Bluetooth RF transceiver 210, the WiFi RF transceiver 212, the WiMAX transceiver 214, and/or the GNSS transceiver 216.

The memory 204 may comprise suitable logic, circuitry, and/or code that may enable storage of data, code, and/or other information utilized by the communication system 200. For example, the memory 204 may be utilized for storing generated processed data, and/or execution code that may be utilized by the main processor 202. The memory 204 may also be utilized to store information, such as configuration information, that may be utilized to control the operation of at least a portion of the communication system 200. For example, the memory 204 may comprise information necessary to configure the Bluetooth RF transceiver 210, the WiFi RF transceiver 212, the WiMAX transceiver 214, and/or the GNSS transceiver 216, to enable transmission and/or reception of RF signals in appropriate frequency bands.

The baseband processor 206 may comprise suitable logic, circuitry, and/or code that may be enabled to process received baseband signals via RF transceivers. The baseband processor 206 also may comprise suitable logic, circuitry, and/or code that may be adapted to process baseband signals for transmission via RF transceivers. For example, the baseband processor 206 may be utilized to process baseband signals transmitted and/or received via the Bluetooth RF transceiver 210, the WiFi RF transceiver 212, the WiMAX transceiver 214, and/or the GNSS transceiver 216 in the communication system 200. Although the baseband processor 206 may be depicted as a single block, the invention need not be so limited. Accordingly, other embodiments of the invention may comprise a plurality of baseband processors for processing signals for one or more available RF transceivers.

Each of the plurality of antennas 208a, ... , 208b may comprise suitable logic, circuitry, and/or code that may enable transmission and/or reception of RF signals within certain bandwidths. For example, the one or more of the plurality of antennas 208a, ... , 208b may enable RF transmission and/or reception via the 2.4 GHz, which may be suitable for Bluetooth and/or WiFi RF transmissions and/or receptions. The plurality of antennas 208a, ... , 208b may be communicatively coupled to the RF switch 218.

The Bluetooth RF transceiver 210 may comprise suitable logic, circuitry, and/or code that may enable processing of transmitted and/or received Bluetooth based signals via, for example, the RF switch 218 and one or more of the plurality of antenna 208a, ... , 208b. The Bluetooth RF transceiver 210 may be operable, for example, to amplify, filter, modulate/demodulate, and/or up-convert/down-convert baseband signals to/from RF signals to enable transmitting and/or receiving RF signals at, for example, approximately the 2.4 GHz frequency band. In this regard, the Bluetooth RF transceiver 210 may be enabled to generate signals, such as local oscillator signals, for the reception and processing of Bluetooth RF signals. The Bluetooth RF transceiver 210 may be enabled to perform necessary conversions between received RF signals and baseband frequency signals that may be processed via digital baseband processors, for example. The Bluetooth RF transceiver 210 may perform direct or intermediate down-conversion of the received RF signals to a baseband frequency signal, for example. In some instances, the Bluetooth RF transceiver 210 may enable analog-to-digital conversion of baseband signal components before transferring the components to digital baseband processors. The Bluetooth RF transceiver 210 may also enable transmission of Bluetooth RF signals via the RF switch 218 and/or the plurality of antenna 208a, ..., 208b at, for example, approximately 2.4 GHz frequency band and/or other designated frequency band. In this regard, the Bluetooth RF transceiver 210 may be enabled to generate signals, such as local oscillator signals, for the transmission and/or processing of Bluetooth signals. The Bluetooth RF transceiver 210 may be enabled to perform necessary conversions between baseband frequency signals, generated via digital baseband processors for example, and transmitted RF signals. In some instances, the Bluetooth RF transceiver 210 may enable digital-to-analog conversion of baseband signals components.

The WiFi RF transceiver 212 may comprise suitable logic, circuitry, and/or code that may enable processing of transmitted and/or received WiFi based signals via, for example, the RF switch 218 and one or more of the plurality of antenna 208a, ..., 208b. The WiFi RF transceiver 212 may be operable, for example, to amplify, filter, modulate and/or demodulate, and/or up-convert and/or down-convert baseband signals to/from RF signals to enable transmitting and/or receiving RF signals at, for example, approximately the 2.4 GHz frequency band. In this regard, the WiFi RF transceiver 212 may be enabled to generate signals, such as local oscillator signals, for the reception and processing of WiFi signals. The WiFi RF transceiver 212 may be enabled to perform necessary conversions between received RF signals and baseband frequency signals that may be processed via one or more digital baseband processors, for example. The WiFi RF transceiver 212 may be enabled to perform direct conversion of the received RF signals to a baseband frequency signal, for example. In some instances, the WiFi RF transceiver 212 may enable analog-to-digital conversion of baseband signal components before transferring the components to digital baseband processors. The WiFi RF transceiver 212 may also enable transmission of WiFi signals at, for example, approximately 2.4 GHz frequency band. In this regard, the WiFi RF transceiver 212 may be enabled to generate signals, such as local oscillator signals, for the transmission and processing of WiFi signals. The WiFi RF transceiver 212 may be enabled to perform necessary conversions between baseband frequency signals, generated via digital baseband processors for example, and transmitted RF signals. In some instances, the WiFi RF transceiver 212 may enable digital-to-analog conversion of baseband signals components.

The WiMAX RF transceiver 214 may comprise suitable logic, circuitry, and/or code that may enable processing of transmitted and/or received WiMAX based signals via, for example, the RF switch 218 and one or more of the plurality of antennas 208a, ..., 208b. The WiMAX RF transceiver 214 may be operable, for example, to amplify, filter, modulate and/or demodulate, and/or up-convert and/or down-convert baseband signals to and/or from RF signals to enable transmitting and/or receiving RF signals in the 2-66 GHz frequency range via WiMAX connections, through the WiMAX link 114 for example. In this regard, the WiMAX RF transceiver 214 may be enabled to generate signals, such as local oscillator signals, which may enable processing of received WiMAX signals. The WiMAX RF transceiver 214 may be enabled to perform necessary conversions between received RF signals and baseband frequency signals that may be processed via one or more digital baseband processors, for example. The WiMAX RF transceiver 214 may be enabled to perform direct or intermediate conversion of the received RF signals to a baseband frequency signal, for example. In some instances, the WiMAX RF transceiver 214 may enable analog-to-digital conversion of baseband signal components before transferring the components to digital baseband processors. The WiMAX RF transceiver 214 may also be enabled to generate signals, such as local oscillator signals, for the transmission and processing of WiMAX signals. The WiMAX RF transceiver 214 may be enabled to perform necessary conversions between baseband frequency signals, generated via digital baseband processors for example, and transmitted RF signals. In some instances, the WiMAX RF transceiver 214 may enable digital-to-analog conversion of baseband signals components.

The GNSS transceiver 216 may comprise suitable logic, circuitry, and/or code that may enable processing of received GNSS based signals via, for example, the RF switch 218 and one or more of the plurality of antennas 208a, ..., 208b. The GNSS transceiver 216 may be operable, for example, to amplify, filter, demodulate, and/or down-convert received RF signals to baseband signals to enable receiving GPS, GLONASS, and/or Galileo based satellite signals. In this regard, the GNSS transceiver 216 may be enabled to generate signals, such as local oscillator signals, for processing of received GNSS signals. The GNSS transceiver 216 may be enabled to perform necessary conversions between received GNSS signals and baseband frequency signals that may be processed via one or more digital baseband processors, for example. The GNSS transceiver 216 may be enabled to perform direct or intermediate conversion of the received GNSS signals to a baseband frequency signal, for example. In some instances, the GNSS transceiver 216 may enable analog-to-digital conversion of baseband signal components before transferring the components to digital baseband processors.

The RF switch 218 may comprise suitable logic, circuitry, and/or code that may enable switching and/or routing of signals generated and/or processed via the Bluetooth RF transceiver 210, the WiFi RF transceiver 212, the WiMAX transceiver 214, and/or the GNSS transceiver 216, which may be transmitted and/or received via one or more of the plurality of antenna 208a, ..., 208b.

In an exemplary embodiment of the invention, the communication system 200 may be utilized to enable Bluetooth and WiMAX coexistence. The communication system 200 may be utilized to determine and/or manage communications that may operate in frequency bands that are adjacent to and/or overlapping with frequencies utilized during WiMAX communication. For example, when WiMAX communication is performed via ∼ 2.3 - 2.5 GHz frequency bands, the communication system 200 may be enabled to determine the presence of Bluetooth based communication, which may be performed via ∼ 2.4 GHz frequency bands. Since WiMAX operates in a licensed frequency band, WiMAX communication may be deemed to have higher priority than Bluetooth based communication. Rather than completely blocking Bluetooth communication, transmission and/or reception of Bluetooth based messaging may be scheduled to enable optimizing Bluetooth communication throughput while, at the same time, preventing any potential interference that may be caused to the WiMAX communication by the Bluetooth communication. For example, transmission of Bluetooth based messaging via the communication system 200 may be scheduled so that it does not occur during downlink (DL) phases of WiMAX connection, where the wireless device 102 may be scheduled to receive WiMAX messaging. Transmission of Bluetooth based messaging may, however, be allowed during uplink (UL) phases, where the wireless device 102 may be scheduled to transmit WiMAX messaging, and/or during the WiMAX connation's scheduled periods of inactivity. Similarly, Bluetooth connections may be managed to ensure that reception of Bluetooth based messaging via the communication system 200 may be scheduled so that it would not occur during uplink (UL) phases of WiMAX connection, where the wireless device 102 may be scheduled to transmit WiMAX messaging. Reception of Bluetooth based messaging may, however, be allowed during downlink (DL) phases, where the wireless device 102 may be scheduled to receive WiMAX messaging, and/or during the WiMAX connation's scheduled periods of inactivity.

Additionally, clock signals utilized during WiMAX and Bluetooth communications may be synchronized to enable performing scheduling operations. For example, clock signals utilized during Bluetooth transmission and/or reception via the Bluetooth transceiver 212 may be synchronized to WiMAX communication via the WiMAX transceiver 214 to ensure that timing of the WiMAX and Bluetooth communication may be aligned so that scheduling of subsequent transmission and/or reception via Bluetooth connections may be effectively performed.

In an exemplary embodiment of the invention, in instances when more than one Bluetooth connection may be active and/or requested, prioritization among the Bluetooth connections may be utilized when performing scheduling operations. For example, in instances when both HID sniff communication and A2DP Bluetooth connections may be active via the communication system 200, only one of the Bluetooth connections, for example HID sniff based communication, may be scheduled during times when Bluetooth messaging may be generally allowed.

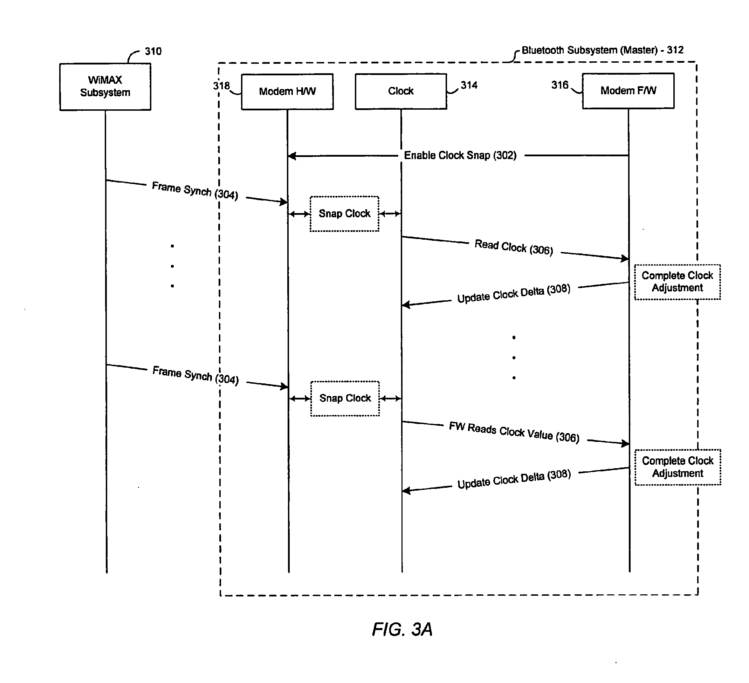

FIG. 3A is a diagram that illustrates WiMAX and Bluetooth clock synchronization in a device when Bluetooth subsystem in the device is inactive, in accordance with an embodiment of the invention. Referring to FIG. 3A, there is shown a signal flow chart that shows interactions between a WiMAX subsystem 310 and a Bluetooth subsystem 312 collocated within a single device to enable alignment of Bluetooth subsystem 312 clock with the WiMAX frames communicated via the WiMAX subsystem 310 when the Bluetooth subsystem 312 is not actively communicating with other Bluetooth devices. The WiMAX subsystem 310 may correspond to, for example, the WiMAX RF transceiver 214 as described in FIG. 2, and/or any additional logic, circuitry, and/or code that may be utilized to enable WiMAX communication via the communication system 200. The Bluetooth subsystem 312 may correspond to, for example, the Bluetooth RF transceiver 212 as described in FIG. 2, and/or any additional logic, circuitry, and/or code that may be utilized to enable Bluetooth communication via the communication system 200. The Bluetooth subsystem 312 may comprise modem hardware functionality 318, modem firmware functionality 316, and clock functionality 314. The Bluetooth modem hardware functionality 318 may correspond to hardware within the Bluetooth subsystem 312 that may be utilized to perform RF communication during Bluetooth connections. The Bluetooth modem firmware functionality 316 may correspond to software that may be embedded within the Bluetooth subsystem 312, which may be utilized to manage and/or control the Bluetooth subsystem 312 and/or existing Bluetooth connections. The Bluetooth clock functionality 314 may correspond to the functionality, within the Bluetooth subsystem 312, to generate, maintains, and/or provide native clocking within the Bluetooth subsystem 312.

The Bluetooth modem firmware functionality 316 may communicate an Enable_Clock_Snap message 302 to the Bluetooth modem hardware functionality 318 to indicate that clock changing may be performed in the Bluetooth subsystem 312. The snap clock function may record the Bluetooth clock value upon the arrival of the Frame_Sync signal 304. The recorded clock value may then be sent to the modem firmware functionality 316 modem firmware functionality 316in the Read clock message 306. The modem firmware functionality 316 then uses that information to compute the change (delta) required in the Bluetooth clock value. That clock delta (or part thereof) is sent back to clock via Update_Clock_Delta 308. Multiple Update_Clock_Delta 308 message can be used if a portion of the calculated required clock adjustment is contained in the Update_Clock_Delta 308 message. The Bluetooth clock functionality 314 may be adjusted, in a single step, during Bluetooth inactivity based on messaging received from the WiMAX subsystem 310. In instances when the WiMAX subsystem 310 may become communicatively active, a frame synchronization (Frame_Sync) signal 304 may be communicated from the WiMAX subsystem 310 to the Bluetooth modem hardware functionality 318 to trigger clock synchronization. The Frame_Sync signal 304 may comprise sufficient information about the WiMAX clock, which may be utilized within the Bluetooth subsystem 312 to adjust the Bluetooth clock. The Frame_Sync from the WiMAX device indicates the start of the WiMAX frame at WiMAX base stations or access points. The Bluetooth modem hardware functionality 318 may then perform snap clock with the Bluetooth clock functionality 314, in which the Bluetooth clock is locked to enable accurate determination of necessary changes based on the information received via the Frame_Sync signal 304. An interrupt may also be generated, via Bluetooth modem hardware functionality 318, to indicate to the Bluetooth modem firmware functionality 316 that the Frame_Sync signal 304 was received and/or that clock adjustment is triggered in the Bluetooth subsystem 312. The Bluetooth clock functionality 314 may then communicate a clock read (Clock_Read) message 306 to the Bluetooth modem firmware functionality 316, which may comprise information about the Bluetooth clock. The Bluetooth modem firmware functionality 316 may compute the necessary clock adjustment, which may comprise determining total clock adjustment necessary to synchronize to Bluetooth clock with the clock signal in the WiMAX subsystem 310. The determined clock adjustment may then be communicated via an clock update (Update_Clock_Delta) message 308. The process may be repeated whenever a Frame_Sync message is received from the WiMAX subsystem 310.

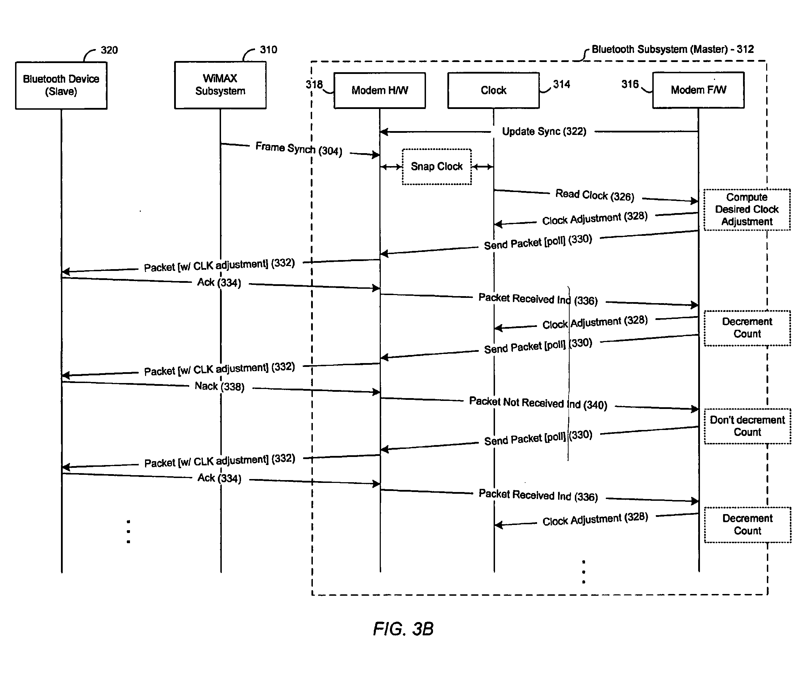

FIG. 3B is a diagram that illustrates WiMAX and Bluetooth clock synchronization in a device when the Bluetooth subsystem in the device is actively operating as a master in Bluetooth communication with a slave Bluetooth device, in accordance with an embodiment of the invention. Referring to FIG. 3B, there is shown a messaging flow chart that shows interactions between a Bluetooth slave device 320, and the WiMAX subsystem 310 and the Bluetooth subsystem 312, which may be collocated within a single device, to enable alignment of Bluetooth subsystem 312 clock with the WiMAX frames communicated via the WiMAX subsystem 310 when the Bluetooth subsystem 312 is actively communicating, as a master device, with the Bluetooth slave device 320.

The Bluetooth modem firmware functionality 316 may communicate an Update_Synch message 322 to the Bluetooth modem hardware functionality 318 to indicate that a Bluetooth clock change may be performed in the Bluetooth subsystem 312, wherein the clock change may be performed via clock dragging wherein the Bluetooth clock may be adjusted, incrementally via a plurality of adjustment steps, during Bluetooth communication based on messaging received from the WiMAX subsystem 310. Clock dragging may enable changing the Bluetooth clock in a manner that may not disturb ongoing Bluetooth communication with the Bluetooth slave device 320. Subsequently, the WiMAX subsystem 310 may send the Frame_Sync signal 304 to the Bluetooth modem hardware functionality 318 to trigger clock synchronization. The Bluetooth modem hardware functionality 318 may then perform snap clock with the Bluetooth clock functionality 314, wherein the Bluetooth clock is locked to enable accurate determination of necessary changes based on the information received via the Frame_Sync signal 304. An interrupt may also be generated, via the Bluetooth modem hardware functionality 318, to indicate to the Bluetooth modem firmware functionality 316 that Frame_Sync signal 304 was received and/or that clock adjustment is triggered in the Bluetooth subsystem 312. The Bluetooth clock functionality 314 may then communicate a clock read (Clock_Read) message 326 to the Bluetooth modem firmware functionality 316, which may comprise information about the Bluetooth clock. The Bluetooth modem firmware functionality 316 may then compute the required clock adjustment, which may comprise in addition to determining the total clock adjustment necessary to synchronize to Bluetooth clock with the clock signal in the WiMAX subsystem 310, a count and/or size of incremental steps necessary to achieve the overall clock change while continuing on-going Bluetooth communication with the Bluetooth slave device 320.

The Bluetooth modem firmware functionality 316 may then communicate an incremental clock adjustment to the Bluetooth clock functionality 314 via a clock adjustment, (Clock_Adjustment) message 328. The Bluetooth modem firmware functionality 316 may then communicate poll (Send_Packet) message 330 to the Bluetooth modem hardware functionality 318 to trigger sending of the next packet communication to the Bluetooth slave device 320, and to indicate to the Bluetooth modem hardware functionality 318 to read and communicate the changed clock based on the adjustment performed. The Bluetooth modem hardware functionality 318 may then send a Packet (with clock adjustment) message 332, wherein the clock adjustment reflects the present adjusted value of the Bluetooth clock. Once the Bluetooth modem hardware functionality 318 receives an Ack message 334 indicating a successful reception of the Packet (with clock adjustment) message 332, the Bluetooth modem hardware functionality 318 may send the Bluetooth modem firmware functionality 316 an indication (Packet_Received_Indication) message 336, which may indicate successful packet reception and clock adjustment in the Bluetooth slave device 320. The Bluetooth modem firmware functionality 316 may then decrement clock adjustment count, and repeat the sending of the Clock_Adjustment message 328 to Bluetooth clock functionality 314 and sending of Send_Packet (poll) message 330 to the Bluetooth modem hardware functionality 318, substantially as described.

The Bluetooth modem hardware functionality 318 may communicate an indication message (Packet_Not_Received_Indication) message 340 to Bluetooth modem firmware functionality 316 where there is a failure in reception and/or processing of the Packet (with clock adjustment) message 332 in the Bluetooth slave device 320. Such failure may be determined explicitly based on reception of a Nack message 338, or implicitly, where there is a timeout for example. Upon reception of the Packet_Not_Received_Indication message 340, the Bluetooth modem firmware functionality 316 would not decrement clock adjustment count, and would not send a new Clock_Adjustment message 328 to Bluetooth clock functionality 314. The Bluetooth modem firmware functionality 316 may, instead, communicate a new Send_Packet (poll) message 330 to the Bluetooth modem hardware functionality 318, which may cause the Bluetooth modem hardware functionality 318 to send another Packet (with clock adjustment) message 332. The clock adjustment value may reflect the previously adjusted value of the Bluetooth clock. The process may then be repeated until the count reaches zero, which may indicate that the total clock adjustment in the Bluetooth subsystem 312 and the Bluetooth slave device 320 is completed.

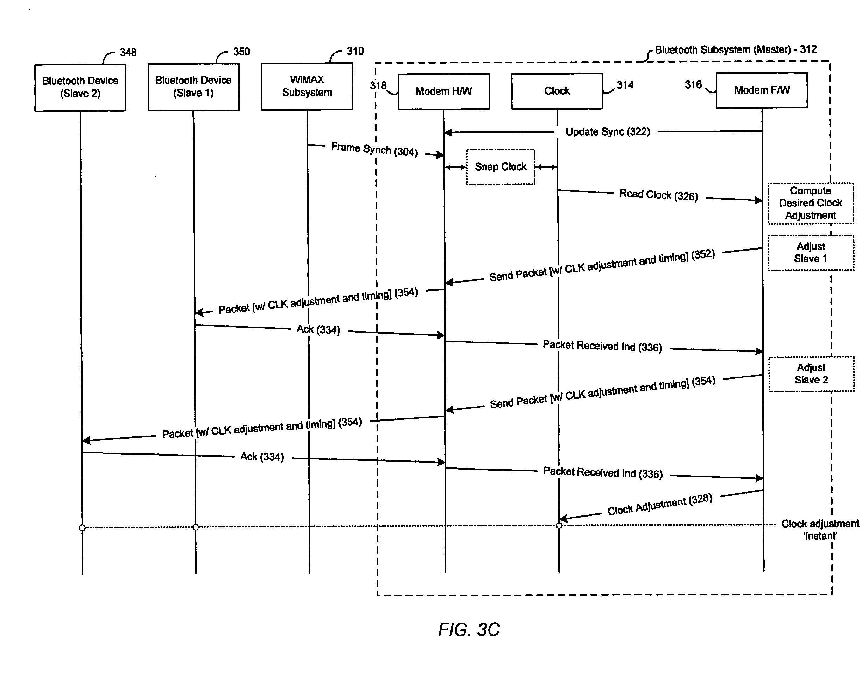

FIG. 3C is a diagram that illustrates WiMAX and Bluetooth clock synchronization in a device when the Bluetooth subsystem in the device is actively utilized as master in Bluetooth communication with two slave Bluetooth devices, in accordance with an embodiment of the invention. Referring to FIG. 3C, there is shown a messaging flow chart that shows interactions between two Bluetooth slave devices 348 and 350, and the WiMAX subsystem 310 and the Bluetooth subsystem 312, which may be collocated within a single device, to enable aligning Bluetooth subsystem 312 clock with the WiMAX frames communicated via the WiMAX subsystem 310 when the Bluetooth subsystem 312 is actively communicating, as a master device, in a Pico net comprising the two Bluetooth slave devices 348 and 350.

The process may be substantially similar to the process described in FIG. 3B up until the computation of the clock adjustment after reception of Read Clock message 326 in the Bluetooth modem firmware functionality 316. However, rather than using clock dragging, as described in FIG. 3B, wherein incremental clock adjustments are made within the Bluetooth clock, the process may utilize here pre-determined timing approach, wherein clock adjustment may be performed simultaneously at a determined future instant within all active Bluetooth devices. The Bluetooth modem firmware functionality 316 may compute the total clock adjustment necessary to achieve clock synchronization between the Bluetooth subsystem 312 and the WiMAX subsystem 310 and may also determine an adjustment 'instant' when the clock adjustment may take effect.

The Bluetooth modem firmware functionality 316 may first perform clock adjustment with the first Bluetooth slave device 350. A Send_Packet (with clock adjustment and timing) message 352 may be communicated to the Bluetooth modem hardware functionality 318, which, in addition to triggering sending the next packet communication to the first Bluetooth slave device 350, may also comprise information indicating the total required clock change and a future instant when the change is to take effect. The Bluetooth modem hardware functionality 318 may then send a Packet (with clock adjustment and timing) message 354, which may comprise in addition to the Bluetooth data the clock change information received from the Bluetooth modem firmware functionality 316. Once the Bluetooth modem hardware functionality 318 receives an Ack message 334 indicating a successful reception of the Packet (with clock adjustment) message 332 in the first Bluetooth slave device 350, the Bluetooth modem hardware functionality 318 may send the Bluetooth modem firmware functionality 316 a Packet_Received_Indication message 336. The Bluetooth modem firmware functionality 316 may then perform clock adjustment with the second Bluetooth slave device 348, substantially in similar manner. While not shown in FIG. 3C, a repeat mechanism may be utilized to enable retrying slave adjustments when there is a failure in reception of the Packet (with clock adjustment and timing) message 354 in a slave device, which may be determined explicitly via a Nack message 338 or implicitly, via timeout for example, substantially as described in FIG. 3B.

The Bluetooth modem firmware functionality 316 may subsequently send a Clock_Adjustment message 328 to the Bluetooth clock functionality 314 to effectuate the clock adjustment at the predetermined instant, and the slave Bluetooth devices 348 and 350 would make similar adjustments.

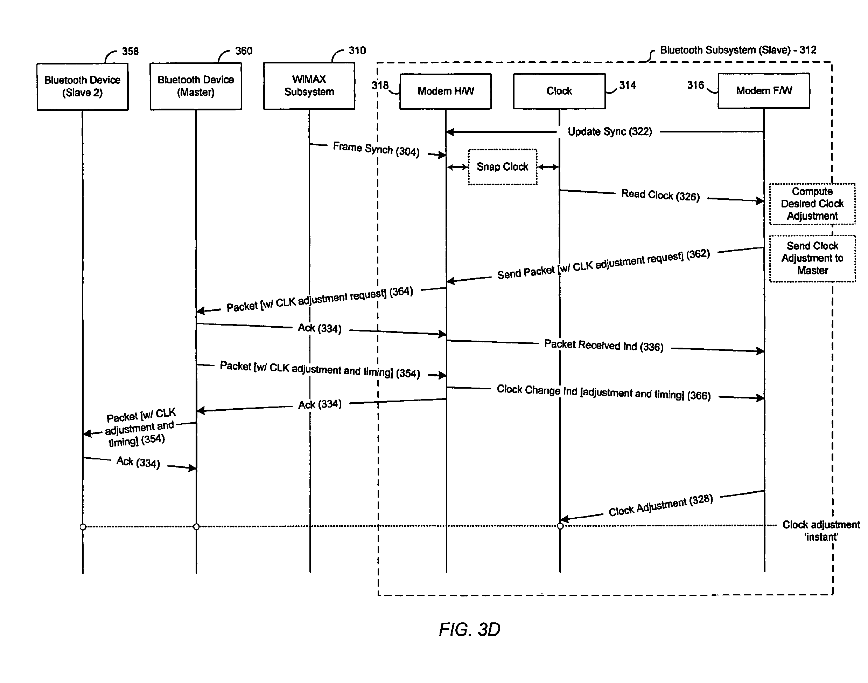

FIG. 3D is a diagram that illustrates WiMAX and Bluetooth clock synchronization when the Bluetooth subsystem operates as a slave in Bluetooth communication with a master Bluetooth device that is communicating with another slave Bluetooth device, in accordance with an embodiment of the invention. Referring to FIG. 3D, there is shown a messaging flow chart that shows interactions between the WiMAX subsystem 310 and the Bluetooth subsystem 312, which may be collocated within a single device, and a master Bluetooth device 360 and second slave Bluetooth device 358, to enable alignment of a Bluetooth subsystem 312 clock with the WiMAX frames communicated via the WiMAX subsystem 310 when the Bluetooth subsystem 312 is actively communicating, as a slave device, within a Pico net that comprises the three Bluetooth devices.

The process may be substantially similar to the process described in FIG. 3B up until the computation of the clock adjustment after reception of Read Clock message 326 in the Bluetooth modem firmware functionality 316. However, because the Bluetooth subsystem 312 functions as a slave Bluetooth device in this setup, the Bluetooth modem firmware functionality 316 may only compute the total clock adjustment necessary to achieve clock synchronization between the Bluetooth subsystem 312 and the WiMAX subsystem 310.

The Bluetooth modem firmware functionality 316 may then communicate the computed clock adjustment to the Bluetooth master device 360. A Send_Packet (with clock adjustment) message 362 may be communicated to the Bluetooth modem hardware functionality 318, which, in addition to triggering the sending of the next packet to the Bluetooth master device 360, may also comprise information indicating the total required clock adjustment. The Bluetooth modem hardware functionality 318 may then send a Packet (with clock adjustment) message 364, which may comprise, in addition to Bluetooth data, the clock adjustment information received from the Bluetooth modem firmware functionality 316. Once the Bluetooth modem hardware functionality 318 receives an acknowledgement (ACK) message 334 indicating a successful reception of the Packet (with clock adjustment) message 364, the Bluetooth modem hardware functionality 318 may send to the Bluetooth modem firmware functionality 316 an indication (Packet_Received_Indication) message 336. The Bluetooth modem firmware functionality 316 may then become ready to perform clock adjustment based on messaging from the Bluetooth master device 360.

The Bluetooth master device 360 may subsequently determine, based on information about the remaining devices in the piconet for information, an adjustment 'instant' when the clock adjustment may take effect, and/or any necessary clock adjustment value changes. The Bluetooth master device 360 may send a Packet (with clock adjustment and timing) message 354 to the Bluetooth modem hardware functionality 318. The Bluetooth modem hardware functionality 318 may send a clock indication message (Clock_Change_Indication) message 366, with clock adjustment and timing, to the Bluetooth modem firmware functionality 316, and then send an Ack message 334 to the Bluetooth master device 360. The Bluetooth master device 360 may repeat the same interaction with the second Bluetooth slave device 358. While not shown in FIG. 3D, a repeat mechanism may be utilized to enable retrying slave adjustments when there is a failure in reception of the Packet (with clock adjustment and timing) message 354 in a slave device, which may be determined explicitly via a Nack message 338 or implicitly, via timeout for example.

The Bluetooth modem firmware functionality 316 may subsequently send a Clock_Adjustment message 328 to the Bluetooth clock functionality 314 to effectuate the clock adjustment at the predetermined instant, and the Bluetooth master device 360 and the second Bluetooth slave device 358 would make similar adjustments at the same point.

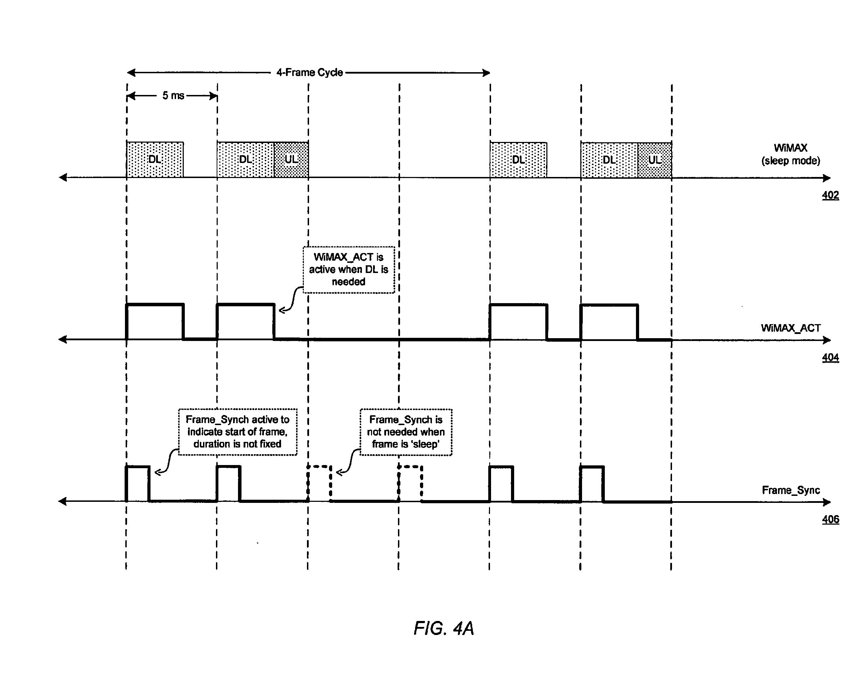

FIG. 4A is a timing diagram that illustrates exemplary WiMAX communication scheduling and control during sleep mode in a WiMAX capable communication device, in accordance with an embodiment of the invention. Referring to FIG. 4A, timing chart 402 may reflect exemplary communication scheduling for WiMAX frame communication during sleep mode operations. During sleep mode, a WiMAX device may utilize a frame cycle wherein only some of the WiMAX data frames within the frame cycle may be utilized to perform WiMAX data transmission and/or reception. For example, the WiMAX subsystem 310 may implement a 4-frame cycle, with 5 millisecond (ms) frames, wherein WiMAX communication may only be performed during the first 2 frames and no WiMAX activity during the latter 2 frames. Additionally, each of the WiMAX frames may be further divided into a downlink (DL) portion followed and an uplink (UL) portion. Due to the nature of the WiMAX protocol, the first active WiMAX frame within each 4-frame cycle may not contain UL portion.

Timing charts 404 and 406 show two different control signals, the WiMAX active (WiMAX_ACT) signal and the Frame_Sync signal, which may be utilized via the WiMAX subsystem 310 during WiMAX communications. The WiMAX_ACT signal may be asserted, and may remain asserted, to indicate when the WiMAX subsystem 310 may be scheduled to receive WiMAX data. The Frame_Sync signal may be asserted to indicate a start of WiMAX frames. Unlike the WiMAX_ACT signal, which remains asserted throughout the DL portion slots, the Frame_Sync signal may become active at the start of a WiMAX frame, and may last as necessary to communicate information pertaining to the start of WiMAX frames. During frames of no WiMAX activity, during sleep mode operations for example, the Frame_Sync may not be necessary, and thus it may not be asserted.

In an embodiment of the invention, the WiMAX control signals WiMAX_ACT and Frame_Sync may be utilized to enable performing coexistence related operations in a device with collocated WiMAX and Bluetooth subsystems. For example, the WiMAX control signals WiMAX_ACT and Frame_Sync may be utilized in the wireless device 102 to enable managing Bluetooth communication via the Bluetooth subsystem 312. For example, where the WiMAX ACT control signal is asserted, the Bluetooth subsystem does not transmit and/or if any Bluetooth transmission is underway, it stops immediately. The Frame_Sync signal may be utilized, for example, to trigger clock synchronization within the Bluetooth subsystem 312, substantially as described in FIGs. 3A, 3B, 3C, and/or 3D.

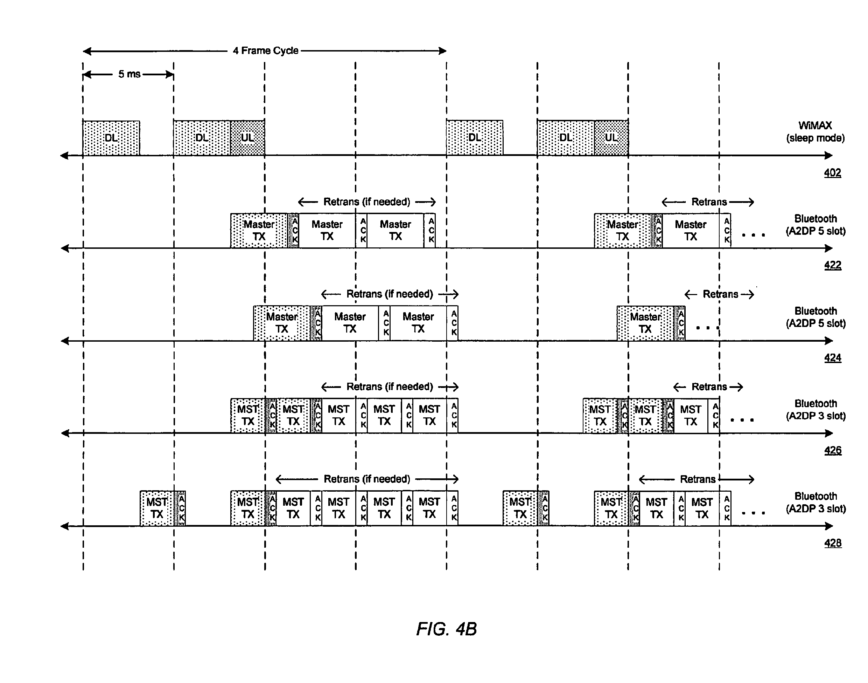

FIG. 4B is a timing diagram that illustrates exemplary Bluetooth A2DP communication scheduling during WiMAX sleep mode to enable WiMAX and Bluetooth coexistence in a communication device, in accordance with an embodiment of the invention. In this regard, FIG. 4B is a timing diagram that illustrates exemplary Bluetooth A2DP 5-slot and A2DP 3-slot communication scheduling during WiMAX sleep mode to enable WiMAX/Bluetooth coexistence.

Referring to FIG. 4B, the timing chart 402 shows the exemplary communication scheduling for WiMAX frame communication via the WiMAX subsystem 310 during sleep mode operations, substantially as described in FIG. 4A. Timing charts 424, 426, 428 and 430 show exemplary communication scheduling for Bluetooth Advance Audio Distribution Protocol (A2DP) based communication to enable WiMAX and Bluetooth coexistence. Clock synchronization may be performed initially, utilizing the \/ViMAX_ACT and/or the Frame_Sync signals, to ensure that the Bluetooth clock is aligned with the WiMAX frames. The clock synchronization may also ensure that the duration of each of Bluetooth communication slots and WiMAX may be the same.

The timing charts 422 and 424 show exemplary communication scheduling for 5-slot A2DP Bluetooth communication via the Bluetooth subsystem 312, wherein the time scheduling may optimize Bluetooth A2DP communication, wherein the Bluetooth subsystem 312 may be operable as a Bluetooth master device, while also avoiding potential collision with the WiMAX communication. The payload of 5-slot A2DP packets may be sufficiently large to hold enough data for stereo data corresponding to 20 ms worth of audio streaming. During 5-slot A2DP Bluetooth communication, the Bluetooth subsystem 312 may transmit 5-slot A2DP data packets, and each transmitted 5-slot packet may be followed by a single slot where acknowledgment (ACK) packets may be received, via the Bluetooth subsystem 312, from the Bluetooth device that receives the 5-slot A2DP data packet. Additionally, and to ensure quality of service, for example, retransmissions of the 5-slot A2DP packets may also be scheduled. Consequently, the Bluetooth 5-slot A2DP communication timing may be scheduled such that 5-slot packet transmission may be initiated anywhere after the start of the UL portion in the second WiMAX frame, as long as the last scheduled retransmission of 5-slot A2DP packets, if needed, is complete prior to the start of the DL portion of the first WiMAX frame in the next 4-frame cycle. The scheduling of the 5-slot A2DP Bluetooth communication may be such that the last ACK slot overlaps with the DL portion of the first WiMAX frame in the next 4-frame cycle, as shown in the timing chart 424.

The timing charts 426 and 428 show exemplary communication scheduling for 3-slot A2DP Bluetooth communication via the Bluetooth subsystem 312. 3-slot A2DP packets may carry enough data for stereo data corresponding to 10 ms worth of audio streaming, and two 3-slot packets may hold enough data for 20 ms audio steaming. During 3-slot A2DP Bluetooth communication, the Bluetooth subsystem 312 may transmit 3-slot A2DP data packets, and each transmitted 3-slot packet may be followed by a single slot where acknowledgment (ACK) packets may be received, via the Bluetooth subsystem 312, from the Bluetooth device that receives the 3-slot A2DP data packet. Additionally, and to ensure quality of service, for example, retransmissions of the 3-slot A2DP packets may also be scheduled. Consequently, the Bluetooth 3-slot A2DP communication timing may be scheduled, as shown in the timing chart 426, such that the transmission of one or more 3-slot packet may be initiated anywhere after the start of the UL portion in the second WiMAX frame, as long as the last scheduled retransmission of 3-slot A2DP packets, if needed, is complete prior to the start of the DL portion of the first WiMAX frame in the next 4-frame cycle.

The scheduling of the 3-slot A2DP Bluetooth communication may be done such that the last ACK slot overlaps with the DL portion of the first WiMAX frame in the next 4-frame cycle. Where the DUUL ratio is such that a transmission of a 3-slot A2DP packet may be completed within the inactive UL portion of the first WiMAX frame, Bluetooth communication timing may be scheduled, as shown in the timing chart 428, such that the transmission of a 3-slot packet may be performed during the first WiMAX frame, and then one or more additional 3-slot packet may be transmitted after the start of the UL portion in the second WiMAX frame.

While these exemplary timing charts reflect only communication scheduling where the Bluetooth subsystem 312 is utilized as a Bluetooth master device during A2DP communication, similar communication scheduling may be performed where the Bluetooth subsystem 312 may be utilized as a Bluetooth slave device. During slave-based operations, the Bluetooth subsystem 312 may be enabled to receive a 'poll' messaging, during a single slot, followed by, for example, a 3-slot and/or a 5-slot A2DP data packet transmitted via the Bluetooth subsystem 312 where the Bluetooth subsystem 312 is polled for A2PD data.

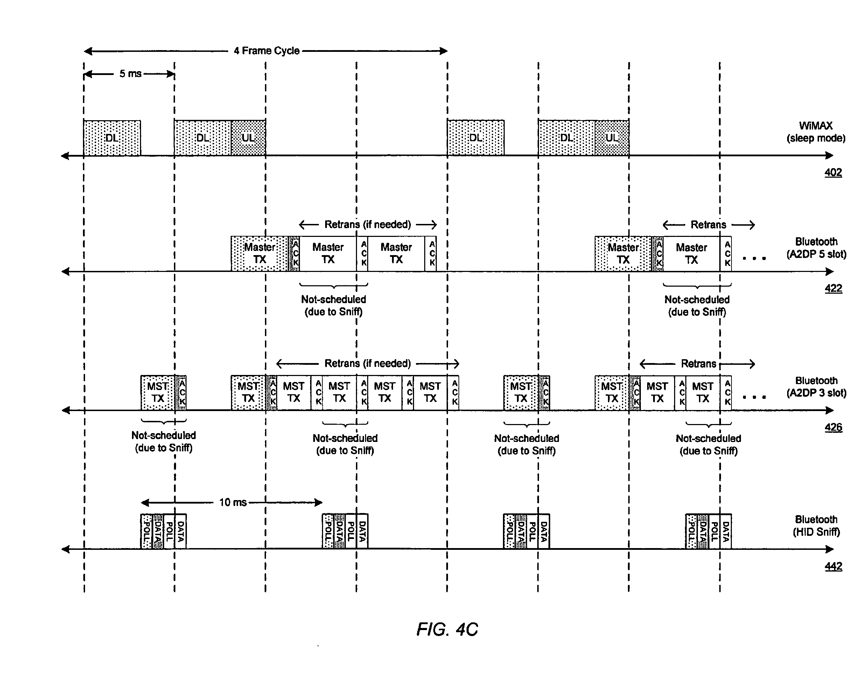

FIG. 4C is a timing diagram that illustrates exemplary Bluetooth A2DP and 10 ms HID sniff communication scheduling during WiMAX sleep mode to enable WiMAX and Bluetooth coexistence in a communication device, in accordance with an embodiment of the invention. In this regard, FIG. 4C is a timing diagram that illustrates Bluetooth A2DP 5-slot, A2DP 3-slot and 10-ms HID sniff communication scheduling during WiMAX sleep mode to enable WiMAX and Bluetooth coexistence in a communication device.

Referring to FIG. 4C, the timing chart 402 shows the exemplary communication scheduling for WiMAX frame communication via the WiMAX subsystem 310 during sleep mode operations, substantially as described in FIG. 4A. The timing charts 422 and 426 show exemplary communication scheduling for 5-slot A2DP and 3-slot A2DP Bluetooth communication, substantially as described in FIG. 4B.

Timing chart 442 shows an exemplary communication scheduling for Bluetooth 10 ms Human Interface Device (HID) sniff communication via the Bluetooth subsystem 312 to enable WiMAX and Bluetooth coexistence. Clock synchronization may be performed initially, utilizing the WiMAX_ACT and/or the Frame_Sync signals, to ensure that the Bluetooth clock is aligned with the WiMAX frames. The clock synchronization may also ensure that the duration of each of Bluetooth communication slots and WiMAX may be the same. During HID sniff communication, where the Bluetooth subsystem 312 may be operable as a master Bluetooth device, the Bluetooth subsystem 312 may enable transmission of 'poll' messages to query Bluetooth slave devices that may be utilized as HID's for status and/or data. The 'poll' messaging may be transmitted during a single slot, with a succeeding slot allocated to enable reception of data from the HID Bluetooth device. Additionally, to improve quality of service, retransmission of HID sniff communication may be enabled, and may factor into scheduling of HID sniff communication. In 10 ms HID Bluetooth communication, the HID sniff communication may be repeated every 10 ms. Accordingly, the Bluetooth HID sniff communication timing may be scheduled, as shown in the timing chart 442, such that start of the transmission within the first 'poll' messaging slot of each HID sniff communication sequence aligns with the start of the inactive UL portion in the first WiMAX frame. The next HID sniff communication sequence may then occur during the two inactive frames of 4-frame cycle. The scheduling pattern may then repeat similarly within each WiMAX 4-frame cycle.

In an exemplary aspect of the invention, the Bluetooth subsystem 312 may be operable to enable scheduling of concurrent Bluetooth A2DP communication and Bluetooth HID sniff communication. In instances where communication scheduling of WiMAX communication may generally allow for Bluetooth communication, prioritization determination may be utilized to determine which of available and/or requested Bluetooth communication may be allowed. For example, because Bluetooth HID sniff communication may be deemed to be high priority communication based on the use requirement of the Bluetooth devices utilized as HID's, Bluetooth HID sniff communication may preempt otherwise permissible Bluetooth 3-slot and/or 5-slot A2DP communication, substantially as shown in FIG. 4C.

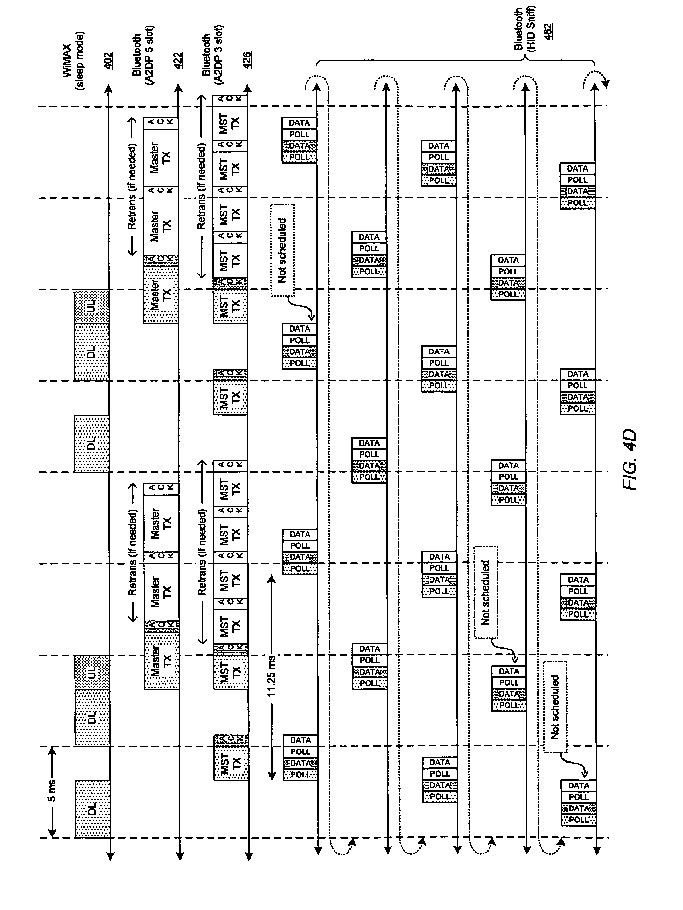

FIG. 4D is a timing diagram that illustrates exemplary Bluetooth A2DP and 11.25 ms HID sniff communication scheduling during WiMAX sleep mode to enable WiMAX and Bluetooth coexistence in a communication device, in accordance with an embodiment of the invention. In this regard, FIG. 4D is a timing diagram that illustrates Bluetooth A2DP 5-slot, A2DP 3-slot and 11.25-ms HID sniff communication scheduling during WiMAX sleep mode to enable WiMAX and Bluetooth coexistence in a communication device.

Referring to FIG. 4D, there is shown timing charts 402, 422 and 426 for communication scheduling for WiMAX frame communication, Bluetooth 5-slot A2DP communication and 3-slot A2DP communication. However, because HID sniff communication sequences are repeated here every 11.25 ms rather than 10 ms, the communication scheduling for HID sniff communication may not fit neatly within the WiMAX 4-frame cycle. Accordingly, the Bluetooth HID sniff communication timing may be scheduled, as shown in timing charts 462, such that start of the transmission within the first 'poll' messaging slot of each HID sniff communication sequence aligns with the start of the inactive UL portion in the first WiMAX frame. The next HID sniff communication sequence may then be scheduled 11.25 ms from the start of the first HID sniff communication sequence, and the scheduling pattern may then be repeated throughout the WiMAX communication. However, while Bluetooth HID sniff communication may preempt otherwise permissible Bluetooth 3-slot and/or 5-slot A2DP communication, substantially as described in FIG. 4D, otherwise permissible Bluetooth HID sniff communication sequences, as a whole or in part, may be preempted where transmission of 'poll' messaging may overlap with active DL portion in WiMAX frames.

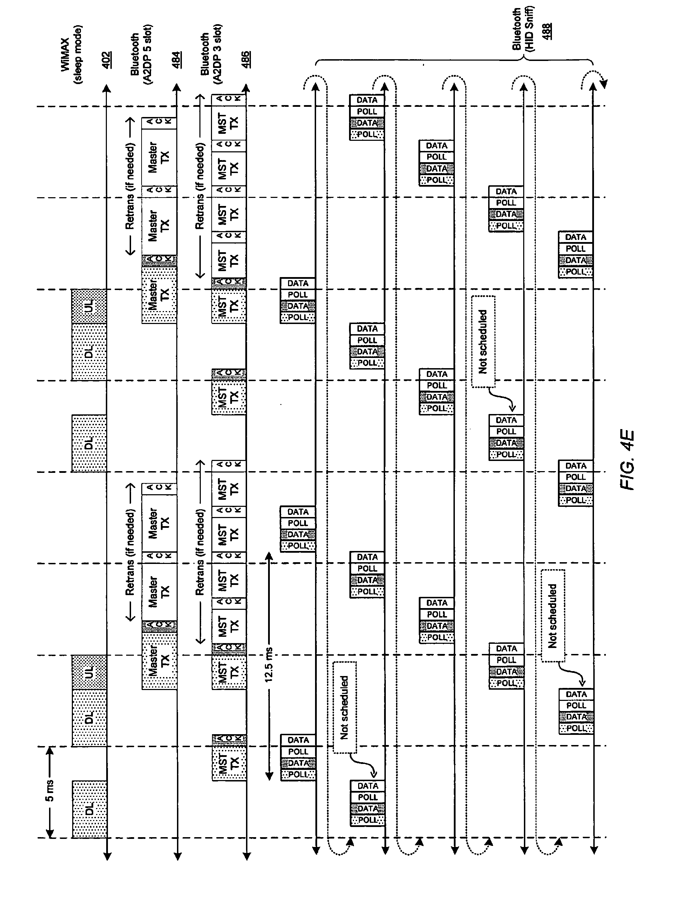

FIG. 4E is a timing diagram that illustrates exemplary Bluetooth A2DP and 12.5 ms HID sniff communication scheduling during WiMAX sleep mode to enable WiMAX and Bluetooth coexistence in a communication device, in accordance with an embodiment of the invention. In this regard, FIG. 4E is a timing diagram that illustrates Bluetooth A2DP 5-slot, A2DP 3-slot and 12.5-ms HID sniff communication scheduling during WiMAX sleep mode to enable WiMAX and Bluetooth coexistence in a communication device.

Referring to FIG. 4E, there is shown timing charts 402, 422 and 426 for communication scheduling for WiMAX frame communication, Bluetooth 5-slot A2DP communication and 3-slot A2DP communication. However, the repetition of the Bluetooth HID sniff communication sequences may be adjusted to account for 12.5 ms repetition cycle rather than 11.25 ms, as shown in timing charts 482.

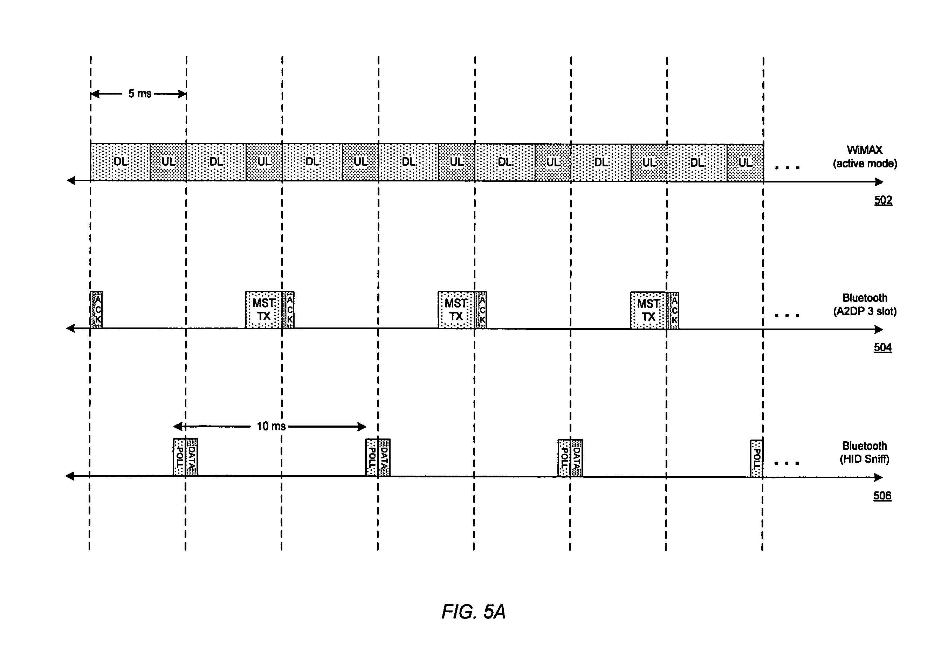

FIG. 5A is a timing diagram that illustrates exemplary Bluetooth A2DP and 10 ms HID sniff communication scheduling during WiMAX active mode to enable WiMAX and Bluetooth coexistence in a communication device that is operable as Bluetooth A2DP slave device, in accordance with an embodiment of the invention. In this regard, FIG. 5A illustrates Bluetooth A2DP 3-slot and 10-ms HID sniff communication scheduling during WiMAX active mode to enable WiMAX and Bluetooth coexistence in a communication device, which operates as a master device on an ACL link.

Referring to FIG. 5A, timing chart 502 may reflect exemplary communication scheduling for WiMAX frame communication during active mode operations. During active mode, a WiMAX device may be performing WiMAX data transmission and/or reception. For example, the WiMAX subsystem 310 may be operable to enable WiMAX active mode communication, wherein WiMAX communication may be carried on via a sequence of active WiMAX frame. Each of the active WiMAX frames may be further divided into a downlink (DL) portion followed and an uplink (UL) portion.

Timing charts 504 and 506 show exemplary communication scheduling for Bluetooth Advance Audio Distribution Protocol (A2DP) communication and for Bluetooth Human Interface Device (HID) sniff communication, to enable WiMAX and Bluetooth coexistence. Clock synchronization may be performed initially, utilizing the WiMAX_ACT and/or the Frame_Sync signals, to ensure that the Bluetooth clock is aligned with the WiMAX frames. The clock synchronization may also ensure that the duration of each of Bluetooth communication slots and WiMAX may be the same.

Specifically, the timing chart 504 shows an exemplary communication scheduling for 3-slot A2DP Bluetooth communication via the Bluetooth subsystem 312, wherein the time scheduling may optimize Bluetooth A2DP communication while also avoiding potential collision with the WiMAX communication. Since the WiMAX subsystem 310 may be continually utilizing 5-slot DL portions in WiMAX frames during active mode WiMAX operations, 5-slot A2DP packets may not be available during WiMAX and Bluetooth coexistence operations. During 3-slot A2DP Bluetooth communication, the Bluetooth subsystem 312 may be operable as a Bluetooth master device, the Bluetooth subsystem 312 may transmit 3-slot A2DP data packets, and each transmitted 3-slot packet may be followed by a single slot where acknowledgment (ACK) packets may be received, via the Bluetooth subsystem 312, from the Bluetooth device that receives the transmitted 3-slot A2DP data packet. Accordingly, the Bluetooth 3-slot A2DP communication timing may be scheduled, as shown in the timing chart 504, such that the transmission the 3-slot A2DP packet may be performed during the UL portions of the active WiMAX frames.

The timing chart 506 shows an exemplary communication scheduling for HID sniff communication via the Bluetooth subsystem 312. During HID sniff communication, in instances where the Bluetooth subsystem 312 may be operable as a master Bluetooth device, the Bluetooth subsystem 312 may enable transmission of 'poll' messages to query Bluetooth slave devices that may be utilized as HID's for status and/or data. The 'poll' messaging may be transmitted during a single slot, with a succeeding slot allocated to enable reception of data from the HID Bluetooth device. In 10 ms HID Bluetooth communication, the HID sniff communication may be repeated every 10 ms. Accordingly, the Bluetooth HID sniff communication timing may be scheduled, as shown in the timing chart 506, such that the 'poll' messaging slot of each HID sniff communication sequence overlap with the UL portions of the active WiMAX frames. Furthermore, and to enable concurrent Bluetooth A2DP communication and Bluetooth HID sniff communication, the scheduling of the two communication may be performed such that they alternate every next WiMAX frame.

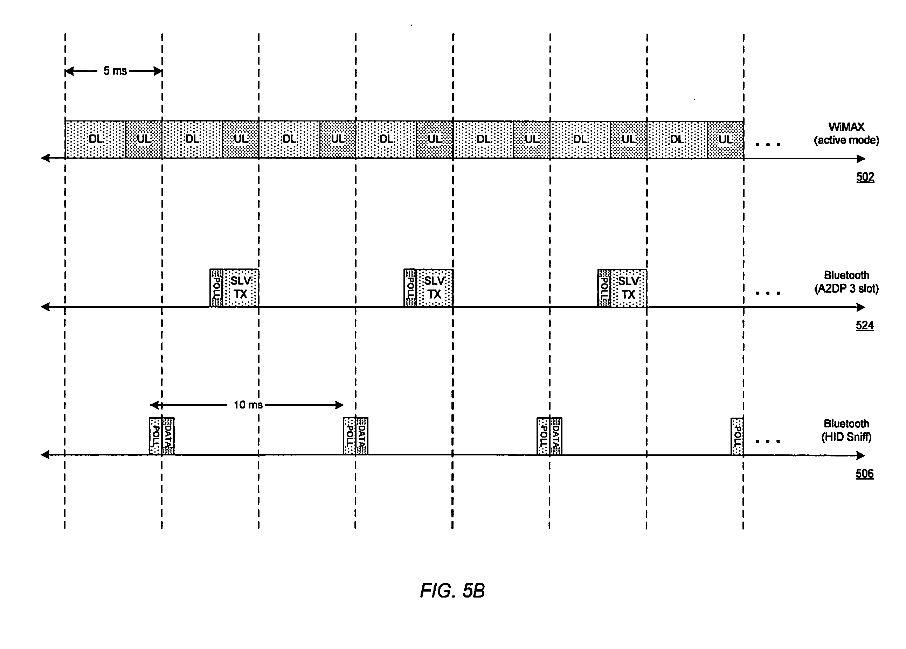

FIG. 5B is a timing diagram that illustrates exemplary Bluetooth A2DP and 10 ms HID sniff communication scheduling during WiMAX active mode to enable WiMAX and Bluetooth coexistence in a communication device that is operable as Bluetooth A2DP master device, in accordance with an embodiment of the invention. In this regard, FIG. 5B is a timing diagram that illustrates Bluetooth A2DP 3-slot and 10-ms HID sniff communication scheduling during WiMAX active mode to enable WiMAX and Bluetooth coexistence in a communication device, where the device is utilized as a slave device on the ACL link.

Referring to FIG. 5B, the timing charts 502 and 506 reflects for WiMAX frame communication scheduling during active mode and Bluetooth 10 ms HID communication scheduling, as described in FIG. 5A; however, the A2DP communication scheduling, as shown in timing chart 524, may be adjusted to accommodate Bluetooth subsystem 312 operations where the Bluetooth subsystem 312 may be operable as a Bluetooth slave device during the A2DP communication. Accordingly, the A2DP messaging sequences may comprise single-slot 'poll', and the Bluetooth subsystem 312 may be enabled to receive a 'poll' messaging, followed by a 3-slot A2DP data packet transmission. Each A2DP messaging sequence may be scheduled, for example, such that the 'poll' slot may overlap with the DL portion of WiMAX frames, while the 3-slot A2DP packet transmission may overlap with the UL portion of the WiMAX frame.

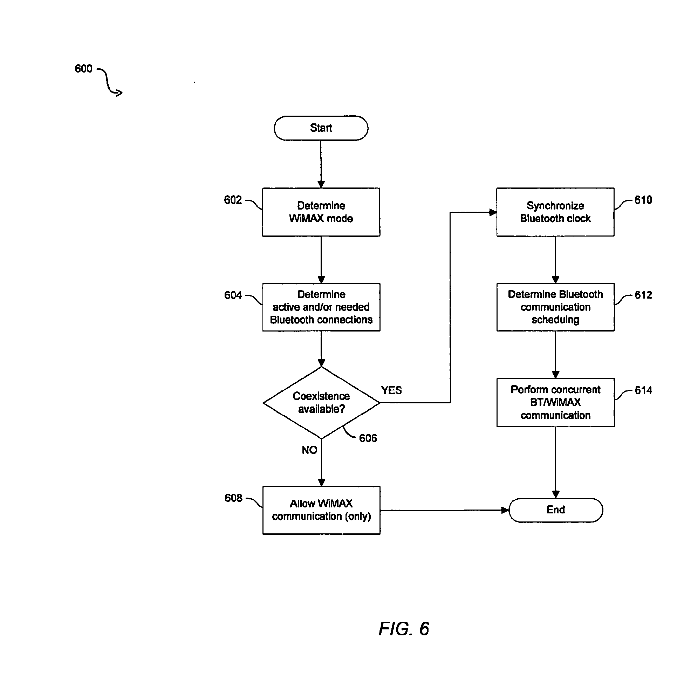

FIG. 6 is a flow chart that illustrates management of system that comprises a plurality of wireless interfaces to enable WiMAX and Bluetooth coexistence, in accordance with an embodiment of the invention. Referring to FIG. 6, there is shown a flow chart 600 comprising a plurality of exemplary steps, which may enable performing WiMAX and Bluetooth coexistence related operations in a device that comprise collocated WiMAX and Bluetooth subsystems, for example WiMAX subsystem 310 and Bluetooth subsystem 312 in wireless device 102.

In step 602, the WiMAX mode may be determined in order to schedule communication of the WiMAX frames. For example, the scheduling of WiMAX frames in the WiMAX subsystem 310 may be performed based on active and/or sleep mode, substantially as described in FIGs. 4A and 5A. In step 604, a determination of active and/or needed Bluetooth connections may be performed. For example, the presence of one or more Bluetooth connections may be determined. Exemplary Bluetooth connections may comprise Advanced Audio Distribution Protocol (A2DP) and/or Human Interface Device (HID) based communications via the Bluetooth subsystem 312. In step 606, a determination whether WiMAX and Bluetooth coexistence may be available may be performed. Availability of WiMAX and Bluetooth coexistence may be based on various factors, which may include express coexistence bar in the system, WiMAX and/or Bluetooth communication quality of service requirements, priority information, and/or characteristics of the various communications. In instances where it may be determined that WiMAX and Bluetooth coexistence may not be available, the exemplary steps may proceed to step 608. In step 608, because WiMAX communication may be deemed to have higher priority than Bluetooth communication, WiMAX communication may be carried on while Bluetooth communication may be blocked while WiMAX communication is ongoing and WiMAX and Bluetooth coexistence is unavailable.

Returning to step 606, in instances where it may be determined that WiMAX and Bluetooth coexistence may not be available, the exemplary steps may proceed to step 610. In step 610, Bluetooth clocking may be synchronized with the WiMAX transmission. For example, the Bluetooth clock in the Bluetooth subsystem 312 may be adjusted to align Bluetooth clocking with WiMAX frames utilized during WiMAX communication via the WiMAX subsystem 310, based on the Frame_Sync messaging. In step 612, communication scheduling for active and/or needed Bluetooth communications, which enabled WiMAX and Bluetooth coexistence may be performed. For example, the communication scheduling for Bluetooth A2DP and/or HID sniff communication may be determined. In step 614, concurrent WiMAX and Bluetooth communications may be carried on according to the communication scheduling determined in step 612, which may enable WiMAX and Bluetooth coexistence.

Various embodiments of the invention may comprise a method and system for Bluetooth and WiMAX coexistence. The wireless device 102, which comprises the collocated WiMAX subsystem 310 and the Bluetooth subsystem 312, may be enabled to perform WiMAX and Bluetooth coexistence operations wherein WiMAX and Bluetooth communications may be carried on concurrently via the wireless device 102. The Bluetooth communications may comprise Advanced Audio Distribution Profile (A2DP) communications over Asynchronous Connection-Less (ACL) data links and/or Human Interface Device (HID) sniff communications. The WiMAX communication may operate in active mode and/or sleep mode, where at least as subset of frames may comprise no WiMAX activity. Communication scheduling for the Bluetooth communication may be performed to optimize Bluetooth communication while avoiding potential collision with the WiMAX communication. The Bluetooth communication scheduling may allow Bluetooth messaging transmission during active WiMAX uplink slots and/or inactive WiMAX slots, Bluetooth messaging reception during active WiMAX downlink slots and/or inactive WiMAX slots, and/or ensures no Bluetooth transmission during active WiMAX downlink slots. Clock signals utilized during WiMAX and Bluetooth communications may be synchronized to enable performing scheduling operations. Clock signals utilized during Bluetooth transmission and/or reception via the Bluetooth subsystem 312 may be synchronized to WiMAX communication via the WiMAX subsystem 310 to ensure that Bluetooth communication may be aligned with WiMAX frames utilizing to perform WiMAX communication. In instances where more than one Bluetooth connection may be active and/or needed, prioritization among the Bluetooth connections may be utilized when performing scheduling operations. For example, in instances where both HID sniff communication and A2DP Bluetooth connections may be active via the communication system 200, only one of the Bluetooth connections, for example HID sniff based communication, may be scheduled during times where Bluetooth messaging may be generally allowed.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for Bluetooth and WiMAX coexistence.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
in a communication device comprising at least a WiMAX Interface and a Bluetooth interface:
determining when communication via said Bluetooth interface will interfere with operation of said WiMAX interface; and
scheduling said communication via said Bluetooth interface during sleep mode and/or active mode of said WiMAX interface, based on said determination.

2. The method according to claim 1, wherein said communication via said Bluetooth interface comprise advanced audio distribution profile (A2DP) based communication and/or human interface device (HID) based communication.

3. The method according to claim 2, comprising transmitting and/or receiving sniff based messages during said HID based communication.

4. The method according to claim 1, wherein said scheduling allows reception of messages during said communication via said Bluetooth interface during downlink (DL) active slots and/or inactive slots on said WiMAX interface in said communication device.

5. The method according to claim 1, wherein said scheduling ensures no transmission of messages during said communication via said Bluetooth interface during downlink (DL) active slots on said WiMAX interface in said communication device.

6. The method according to claim 1, wherein said scheduling allows transmission of messages during said communication via said Bluetooth interface during uplink (UL) active slots and/or inactive slots on said WiMAX interface in said communication device.

7. The method according to claim 1, wherein said scheduling enables optimizing throughput of said communication via said Bluetooth interface.

8. A system for communication, the system comprising:
one or more circuits for use in a communication device comprising at least a WiMAX Interface and a Bluetooth interface, wherein said one or more circuits are operable to determine when communication via said Bluetooth interface will interfere with operation of said WiMAX interface; and
said one or more circuits are operable to schedule said communication via said Bluetooth interface to mitigate said determined interference during sleep mode and/or active mode of said WiMAX interface, based on said determination.

9. The system according to claim 8, wherein said communication via said Bluetooth interface comprise advanced audio distribution profile (A2DP) based communication and/or human interface device (HID) based communication.

10. The system according to claim 9, wherein said one or more circuits enable transmission and/or reception of sniff based messages during said HID based communication.
